# EUROPEAN PATENT SPECIFICATION

(11) **EP 3 464 915 B1**
(45) Date of publication and mention of the grant of the patent: **30.12.2020**
(21) Application number: 17730620.6
(22) Date of filing: 01.06.2017
(51) Int. Cl.: F16C 11/06

(54) **SOCKET ASSEMBLY AND METHOD OF MAKING A SOCKET ASSEMBLY**
KUGELGELENK UND VERFAHREN DAZU
JOINT À ROTULE ET METHODE POUR FRAQUIQUER UN TEL JOINT

(30) Priority: 01.06.2016 US 201615170600
(43) Date of publication of application: 10.04.2019
(73) Proprietor: Federal-Mogul Motorparts LLC, Southfield, MI 48034 (US)
(72) Inventor: PARKER, Glen, C., St. Peters MO 63376 (US); BRETZ, Keith, R., Albers IL 62215 (US); SUGG, Brennan, St. Louis MO 63108 (US); KOPSIE, Eric, Bethalto IL 62010 (US)
(74) Representative: HGF
(86) International application number: PCT/US2017/035342
(87) International publication number: WO 2017/210375

(56) References cited:
- CN-A- 102 478 045
- FR-A- 1 399 174
- KR-B1- 100 891 048
- US-A1- 2007 163 100
- US-B1- 6 422 779
- US-B1- 9 291 195

## Description

### CROSS-REFERENCE TO RELATED APPLICATION

This application claims the benefit of U. S. Utility Application Serial No. 15/170,600, filed June 1, 2016.

### BACKGROUND OF THE INVENTION

### 1. Field of the Invention

The present invention is related, generally, to socket assemblies, and more particularly, to socket assemblies for vehicle suspension systems.

### 2. Related Art

Socket assemblies of the type that are used in vehicle suspension systems typically include a ball stud which is rotatable and/or pivotable relative to a housing. Such socket assemblies typically include one or more bearings that are positioned within the housing and are in sliding contact with a ball portion of the ball stud to facilitate the movement of the ball stud relative to the housing. For example, U.S. Patent No. 6, 422, 779 discloses a ball joint including a socket with a housing, wherein a ball stud has a ball portion having an equator dividing the ball portion into first and second hemispheres. First and second bearings engage the first and second hemispheres, respectively. The bearings are typically made of either metal or a hard plastic material.

Such socket assemblies are typically either of the radial loaded type, compression loaded type or the tension-loaded type, depending on the configuration of the suspension system. In many known types of compression-style socket assemblies, when a radial load is applied to the ball stud, the ball stud will try to walk up the radius of the lower bearing, thereby reducing the surface of contact between the ball stud and the lower bearing.

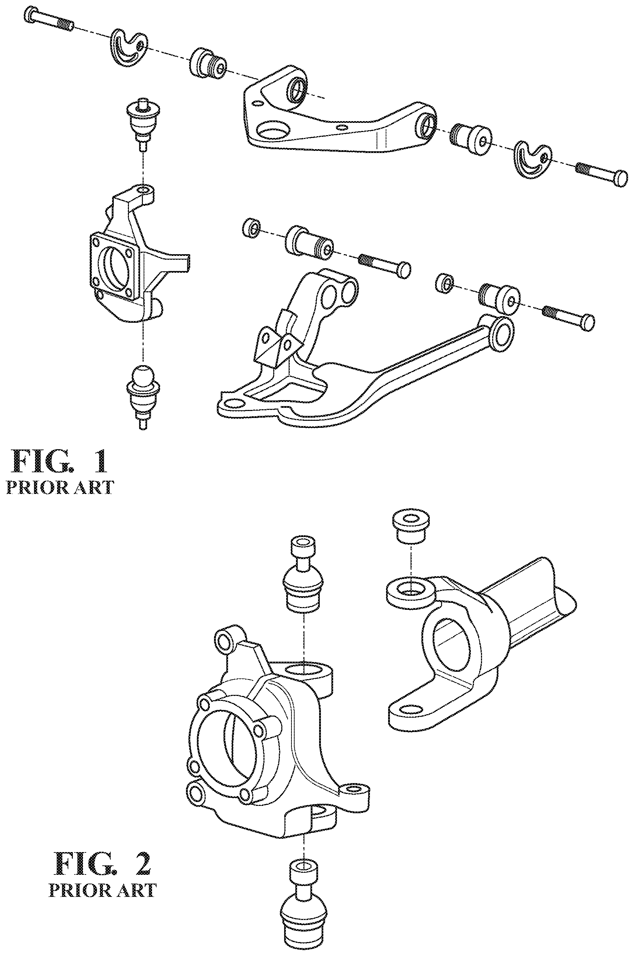

In some applications, two socket assemblies are installed in a single suspension system. For example, Figure 1 shows an exemplary independent suspension system wherein two socket assemblies are employed to connect a single knuckle with upper and lower control arms. Likewise, Figure 2 shows an exemplary fixed axle suspension system which also includes two socket assemblies that join a single knuckle with a drive axle case. In each of these cases, the socket assemblies are aligned with one another along an axis. It is important that the socket assemblies be properly aligned within a predetermined tolerance to prevent one of the socket assemblies from carrying a greater share of the load of the vehicle than the other.

### SUMMARY OF THE INVENTION AND ADVANTAGES

One aspect of the present invention is for a socket assembly with a housing that has an inner bore. The inner bore extends along an axis from a wall at a generally closed first end to an open second end. The socket assembly also includes a ball stud with a ball portion which is received in the inner bore of the housing and with a shank portion which projects out of the inner bore through the open second end. The socket assembly further includes a backing bearing disposed in the inner bore and presenting a curved first bearing surface in surface-to-surface contact with an outer surface of the ball portion of the ball stud. A first spring is disposed in the inner bore and biases the first bearing surface of the backing bearing against the ball portion of the ball stud. An exit bearing is also disposed in the inner bore of the housing. The exit bearing has a second bearing surface with a cylindrical portion that is in contact with an equator of the ball portion of the ball stud and with a semi-spherical portion that is in surface-to-surface contact with an opposite hemisphere of the ball portion of the ball stud from the first bearing surface of the backing bearing. A second spring is disposed in the inner bore of the housing and biases exit bearing into a predetermined location established by the housing. The exit bearing is movable from the predetermined location in a direction towards the open second end of the housing against a biasing force of the second spring.

The movability of the exit bearing allows it to move axially relative to the housing in a direction away from the backing bearing. This is particularly advantageous in cases where the socket assembly is installed in a vehicle suspension assembly where it is axially aligned with another socket assembly. Specifically, during installation, if the installer fails to properly align the two socket assemblies, the exit bearing may be unseated from the predetermined location and moved axially towards the open second end of the housing which prevents the ball stud from being constrained between the backing and exit bearings. As such, the torque required to rotate the ball stud relative to the housing is not increased as could otherwise be the case if the exit bearing was fixed in its location. As the ball stud, the backing bearing and the exit bearing wear during their operating lives, the second spring biases the exit bearing back into the predetermined location to allow the socket assembly to regain much of its internal clearances.

According to another aspect of the present invention, the exit bearing has an outer surface which is frustum of a cone shaped with a first diameter nearest the open second end of the housing and a second diameter nearest the first closed end of the housing and wherein the first diameter is greater than the second diameter and wherein the outer surface is seated against a tapered inner surface of the housing when the exit bearing is in the predetermined location. The frustum of a cone shape of the outer surface of the exit bearing reduces the forces required to unseat the exit bearing from the predetermined location in the inner bore, thereby improving the improving the socket assembly's performance if misaligned with another socket assembly.

According to yet another aspect of the present invention, the exit bearing is in an interference fit with the housing.

According to still another aspect of the present invention, the exit bearing has an outer surface which presents a plurality of axially extending ridges which are spaced circumferentially from one another.

According to a further aspect of the present invention, a dust boot is sealed against the housing and the ball stud for retaining a lubricant within the inner bore and for keeping contaminants out of the inner bore.

According to yet a further aspect of the present invention, the second spring is at least partially embedded in an elastic body of the dust boot.

According to still a further aspect of the present invention, the first spring is a Belleville washer.

According to another aspect of the present invention, the wall at the closed first end of the housing presents a lubricant opening for receiving a lubricant into the inner bore of the housing.

According to yet another aspect of the present invention, the first bearing surface of the backing bearing presents at least one lubricant channel for conveying the lubricant from the lubricant opening in the housing into a gap between the backing and exit bearings.

According to still another aspect of the present invention, the exit bearing presents at least one lubricant channel.

According to a further aspect of the present invention, the second spring is a Belleville washer.

According to yet a further aspect of the present invention, the housing presents a shoulder which faces towards the open second end of the housing and wherein the exit bearing abuts the shoulder when in the predetermined location.

According to still a further aspect of the present invention, a cover plate is disposed in the inner bore of the housing adjacent the open second end.

According to another aspect of the present invention, the housing at the second open end is bent radially inwardly to trap the cover plate in the inner bore of the housing.

Another aspect of the present invention is for a method of making a socket assembly. The method includes the step of step of preparing a housing with an inner bore which extends along an axis from a wall at a generally closed first end to an open second end. The method continues with the step of inserting a first spring into the inner bore of the housing. The method proceeds with the step of inserting a backing bearing with a first bearing surface into the inner bore of the housing such that the backing bearing is movable in a radial direction relative to the housing within the inner bore. The method continues with the step of inserting a ball portion of a ball stud into the inner bore of the housing such that a shank portion of the ball stud projects out of the inner bore through the open second end and wherein a curved outer surface of the ball portion is in sliding contact with the first bearing surface of the backing bearing. The method proceeds with the step of inserting an exit bearing into the inner bore of the housing such that a cylindrical portion of a second bearing surface is in sliding contact with an equator of the ball portion of the ball stud and such that a semi-spherical portion of the second bearing surface is in sliding contact with an opposite hemisphere of the ball portion of the first bearing surface of the backing bearing. The method continues with the step of inserting a second spring into the inner bore of the housing and biasing the exit bearing towards a predetermined location established by the housing while allowing the exit bearing to move from the predetermined location in a direction towards the open second end of the housing against a biasing force of the second spring.

According to another aspect of the present invention, the method further includes the step of inserting a cover plate into the inner bore of the housing.

According to yet another aspect of the present invention, the method includes the step of deforming the housing adjacent the open second end to trap the cover plate, the first spring, the backing bearing, the ball portion of the ball stud, the exit bearing and the second spring in the inner bore of the housing.

### BRIEF DESCRIPTION OF THE DRAWINGS

These and other features and advantages of the present invention will be readily appreciated, as the same becomes better understood by reference to the following detailed description when considered in connection with the accompanying drawings wherein:
Figure 1 is an exploded view of a known independent suspension system;
Figure 2 is an exploded view of a known fixed axle suspension system;
Figure 3 is a front elevation view of an exemplary embodiment of a socket assembly constructed according to an aspect of the present invention;
Figure 4 is an exploded and cross-sectional view of the socket assembly of Figure 3;
Figure 5 is a cross-sectional view of a housing of the socket assembly of Figure 3;
Figure 6 is a cross-sectional view of the socket assembly of Figure 3;
Figure 7 is an enlarged view of a portion of Figure 6;
Figure 8 is another enlarged view of a portion of Figure 6;

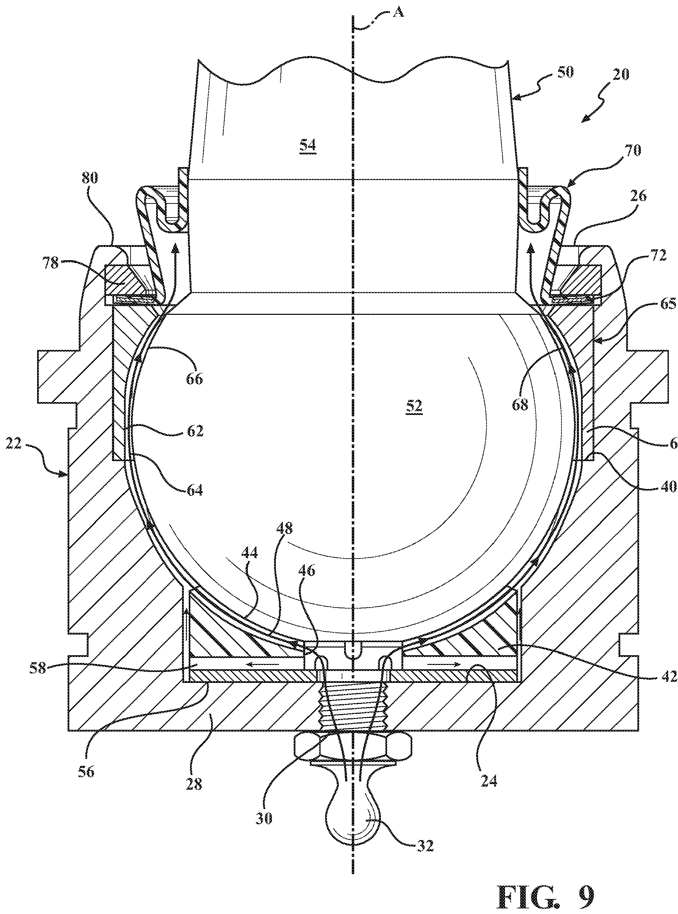

Figure 9 is a cross-sectional view of the socket assembly of Figure 3 and illustrating a flow path for grease within an interior of the socket assembly;
Figure 10 is a front and semi-sectional view of an exit bearing of the socket assembly of Figure 3;
Figure 11 is a top elevation view of the exit bearing of Figure 10;
Figure 12 is a cross-sectional view of an alternate embodiment of the socket assembly, not part of the invention.
Figure 13 is a semi-sectional view of an exit bearing of the socket assembly of Figure 12; and
Figure 14 is a top elevation view of the exit bearing of Figure 13.

### DESCRIPTION OF THE ENABLING EMBODIMENT

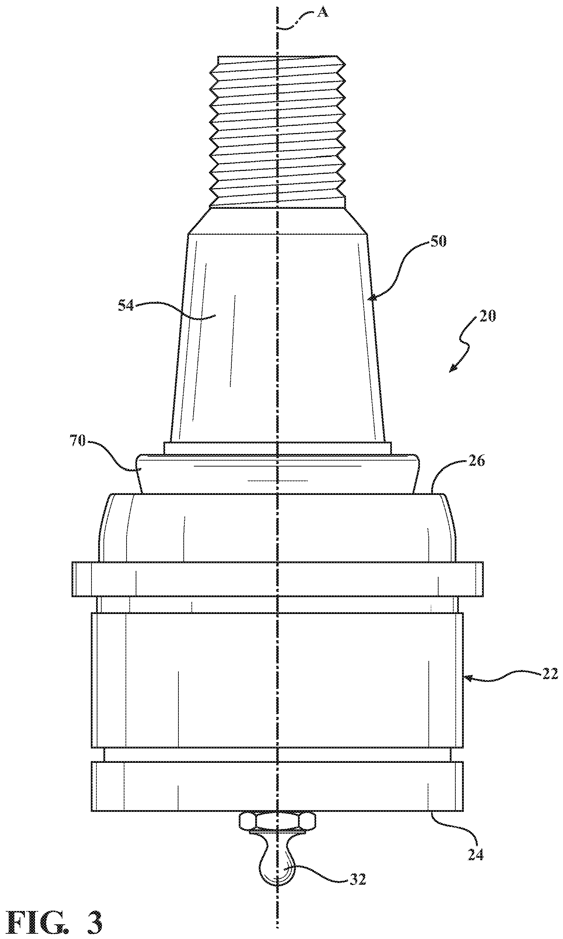

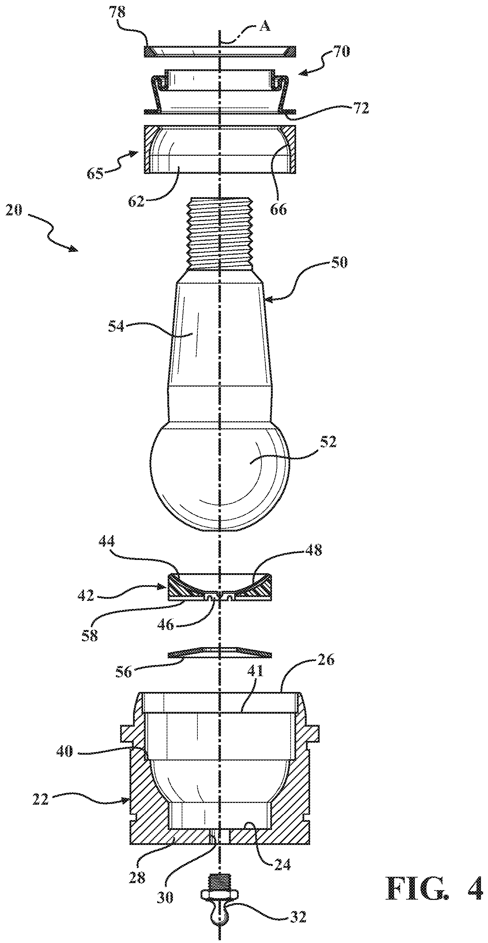

Referring to the Figures, wherein like numerals indicate corresponding parts throughout the several views, a first exemplary embodiment of an improved socket assembly **20** (specifically, a ball joint assembly) is generally shown in Figures 3 and 4. In the exemplary embodiment, the socket assembly **20** is configured for joining a control arm (not shown) or axle (not shown) with a knuckle (not shown) of a vehicle suspension assembly. For example, the socket assembly **20** could find uses in either of the types of suspension assemblies shown in Figures 1 and 2. However, it should be appreciated that the socket assembly **20** could also find uses in tie rod ends or in a wide range of other automotive and non-automotive applications.

The socket assembly **20** includes a housing **22** with an inner bore that extends along an axis A from a closed first end **24** to an open second end **26.** At the closed first end **24,** the housing **22** presents a lower wall **28** with a lubricant opening **30** that receives a grease fitting **32** (also known as a zerk fitting) for conveying a lubricant, such as grease, into the inner bore to initially lubricate the components of the socket assembly **20** and to re-lubricate the socket assembly **20** as part of routine maintenance. The housing **22** is preferably made of a metal, such as steel or a steel alloy, and may be shaped through any suitable process or combination of processes including, for example, forging, casting, machining from a billet, etc. In the exemplary embodiment, the housing **22** is a cartridge for press-fitting into an opening in the control arm. However, the housing could alternately be integrally formed with another component, e.g., a control arm or a tie rod end.

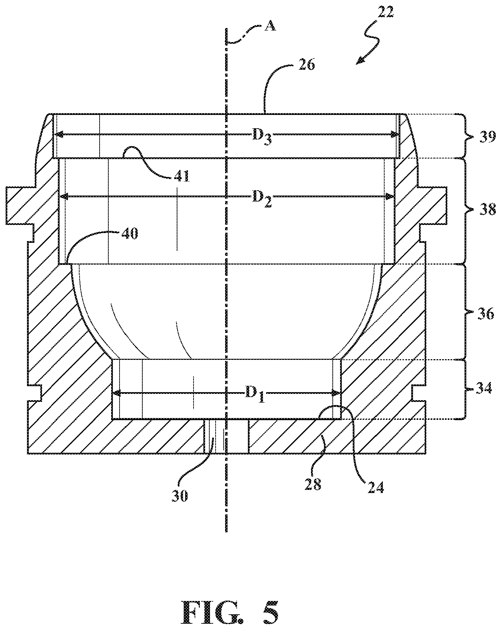

As shown in Figure 5, the inner bore of the housing **22** has a progressively increasing diameter from the closed first end **24** to the open second end **26.** Specifically, the inner bore has a first portion **34** with a generally constant first diameter **D₁** adjacent the closed first end **24,** a second portion **36** with an increasing diameter, a third portion **38** with a generally constant second diameter **D₂,** and a fourth portion **39** with a generally constant third diameter **D₃** adjacent the open second end **26.** As shown, the third diameter **D₃** of the fourth portion **39** is greater than the second diameter **D₂** of the third portion **38,** and the second diameter **D₂** of the third portion **38** is greater than the first diameter **D₁** of the first portion **34.** An inner wall of the housing **22** at the second portion **36** of the inner bore is curved to increase the diameter of the second portion **36** in an axial direction towards the open second end 26. Between the second and third portions **36, 38** of the inner bore, the housing **22** presents a first shoulder **40** which faces towards the open second end **26,** and the housing **22** presents a second shoulder **41** between the third and fourth portions **38, 39** of the inner bore.

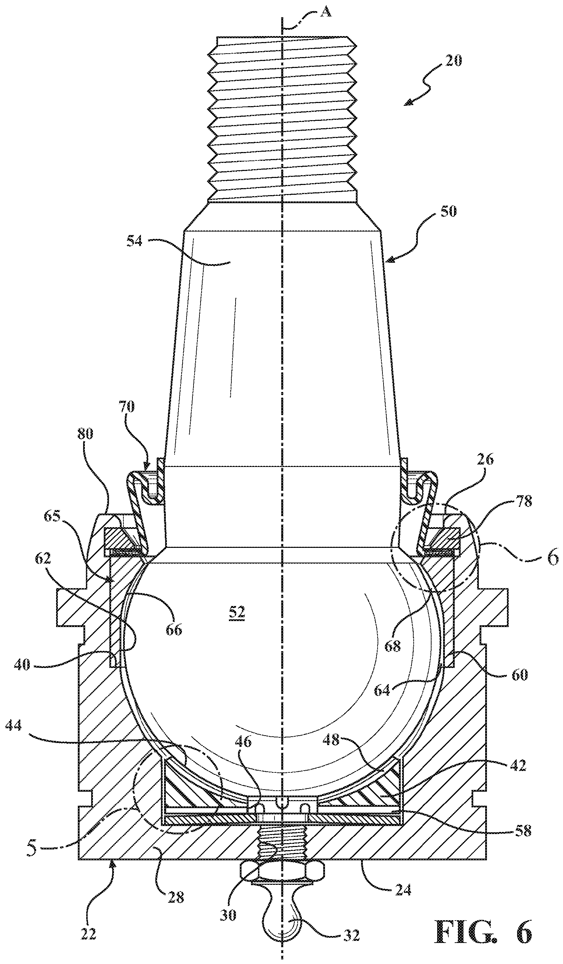

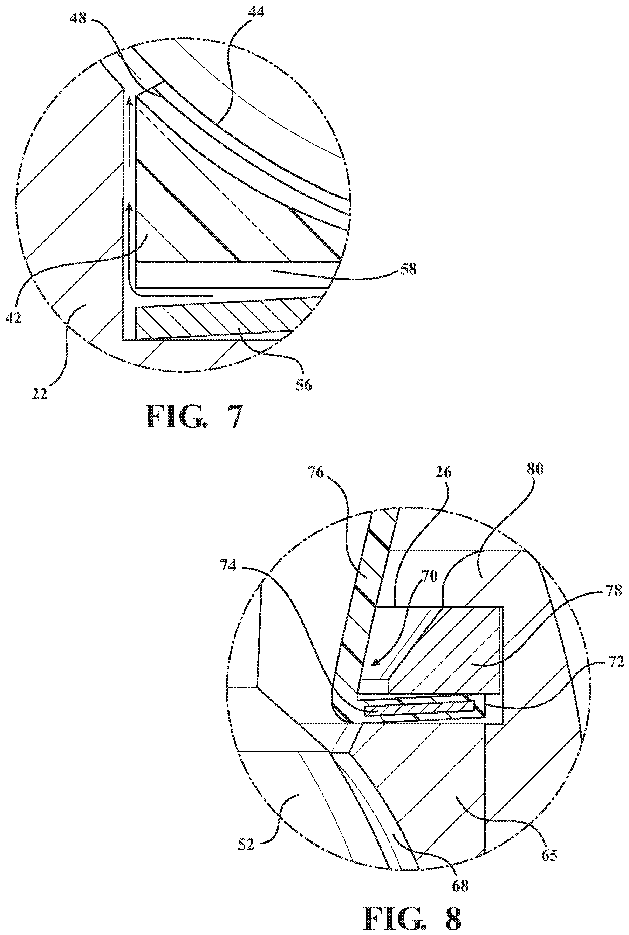

Referring now to Figures 4-6, a backing bearing **42** is received in the first portion **34** of the inner bore and has a semi-spherically curved first bearing surface **44** which faces axially towards the second open end **26.** The backing bearing **42** has an outer surface with an outer diameter which is less than the first diameter **D₁** of the first portion **34** to present a gap (shown in Figure 7) between the outer surface of the backing bearing **42** and an inner surface of the housing **22.** As such, the backing bearing **42** is allowed to float in a radial direction in the first portion **34** of the inner bore within limits established by the inner surface of the housing **22.** The backing bearing **42** also includes a lubricant opening **46** which is aligned with the lubricant opening **30** of the lower wall **28** of the housing **22.** The first bearing surface **44** of the exemplary embodiment is provided with a plurality of first grooves **48** formed thereon for distributing a lubricant from the lubricant opening **46** into the second portion **36** of the inner bore. As shown in Figure 7, a lower surface of the backing bearing **42** presents a plurality of lubrication channels **58** that allow the lubricant to flow into the gap between the backing bearing **42** and the first portion **34** of the inner bore of the housing **22** from which the lubricant is able to enter the second portion **36** of the inner bore.

The socket assembly **20** further includes a ball stud **50** which is partially received in the inner bore of the housing **22.** Specifically, the ball stud **50** includes a ball portion **52** that is fully disposed in the inner bore and a shank portion **54** which projects out of the inner bore through the open second end **26.** The shank portion **54** extends from the ball portion **52** to a distal end which is threaded for receiving a nut to connect the shank portion **54** with another component, e.g., a knuckle. The ball portion **52** of the ball stud **50** has a generally semi-spherically curved outer surface which has a similar radius of curvature to the first bearing surface **44** of the backing bearing **42.** The outer surface of the ball portion **52** is in sliding contact with the first bearing surface **44** to allow the ball stud **50** to rotate and pivot relative to the backing bearing **42** and the housing **22** during operation of the suspension assembly. The backing bearing **42** is preferably made of metal, such as steel or a steel alloy.

A first spring in the form of a Belleville washer **65** is positioned in the first portion **34** of the inner bore between the backing bearing **42** and the lower wall **28** of the housing **22** for biasing the first bearing surface **44** of the backing bearing **42** against the outer surface of the ball portion **52** of the ball stud **50.**

The socket assembly **20** further includes an exit bearing **65** which is positioned in the third portion **38** of the inner bore and abuts the first shoulder **40** of the housing **22.** The exit bearing **65** is a separate piece from the backing bearing **42** and is spaced axially therefrom by a gap in the second portion **36** of the inner bore. The exit bearing **65** has a second bearing surface with a cylindrical portion **62** and a semi-spherical portion **66.** The cylindrical portion **62** is in sliding contact with an equator or centerline of the ball portion **52** of the ball stud **50.** The semi-spherical portion **66** has a radius of curvature that is similar to that of an outer surface of the ball portion **52** of the ball stud **50** and is in sliding contact with an opposite hemisphere of the ball portion **52** from the first bearing surface **44** of the backing bearing **42.** In the exemplary embodiment, the second bearing surface **62** is provided with a plurality of second lubrication grooves **64** for distributing lubricant around the surface-to-surface contact area between the second bearing surface and the outer surface of the ball portion **52** of the ball stud **50** and for conveying the lubricant in the inner bore axially across the exit bearing **65.** In the second portion **36** of the inner bore, the gap between the backing bearing **42** and the exit bearing **65** acts as a lubrication reservoir, which holds the lubricant.

The exit bearing **65** has a generally flat or planar top surface **87** which faces towards the open second end **26** of the inner bore and a generally flat or planar lower surface **82** that faces towards the closed first end **24** of the inner bore. When the exit bearing **65** is positioned in a predetermined seating location in the inner bore of the housing **22,** the flat lower surface **82** abuts the first shoulder **40** of the housing **22.**

During operation of the suspension assembly, the cylindrical portion **62** of the second bearing surface transfers all or substantially all of the radial forces between the ball stud **50** and the housing **22** while the backing bearing **42** and the semi-spherical portion **66** of the second bearing surface transfer all or substantially all of the axial forces between the ball stud 50 and the housing **22.**

The socket assembly **20** further includes a dust boot **70** which is sealed against the housing **22** and against the shank portion **54** of the ball stud **50** for maintaining the lubricant in the inner bore of the housing **22** and for keeping contaminants outside of the inner bore. The dust boot **70** includes a first boot end which presents a radially outwardly extending flange **72** with a second spring in the form of a Belleville washer **74** that is embedded within a boot body **76** at the radially outwardly extending flange **72.** The boot body **76** is made of an elastic and flexible sealing material, such as rubber or a plastic material. The radially outwardly extending flange **72** of the dust boot **70** is positioned in the fourth portion **39** of the inner bore of the housing **22** and is in surface-to-surface contact with the top surface **87** of the exit bearing **65.**

A cover plate **78** is positioned at an opposite side of the radially outwardly extending flange **72** of the dust boot **70.** The housing **22** has a radially inwardly extending lip **80** which traps the cover plate **78** and the radially outwardly extending flange **72** of the dust boot **70** between the radially inwardly extending lip **80** and the exit bearing **65.** This also has the effect of preloading the Belleville washer **74** in the dust boot **70** to impart a preload force against the exit bearing **65** to bias the second bearing surface of the exit bearing **65** against the outer surface of the ball portion **52** of the ball stud **50.** The radially inwardly extending lip **80** is preferably formed into the housing **22** by swaging, or spinning, the housing **22** at the open second end **26.**

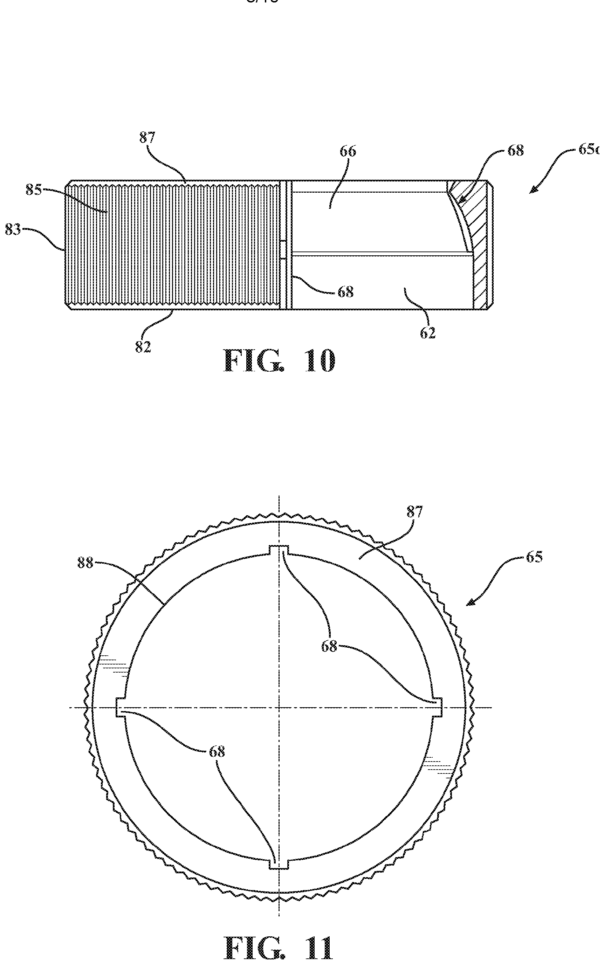

As shown in Figure 10, in the first exemplary embodiment of the socket assembly **20,** the exit bearing **65** has an outer surface **83** that is generally cylindrical in shape and includes a plurality of axially extending and circumferentially spaced ridges **85,** or knurls, distributed around the outer surface **83.** As shown, the ridges **85** extend axially from the planar top surface **87** of the exit bearing **65** to the planar lower surface **82.** The ridges **85** prevent rotation of the exit bearing **65** within the inner bore and relative to the housing **22.**

As shown in Figure 11, as viewed from above, an opening **88** in the planar top surface **87** of this embodiment of the exit bearing **65** is generally circular in shape to allow the ball stud **50** to rotate relative to the housing **22** by a substantially equal amount in all rotational directions.

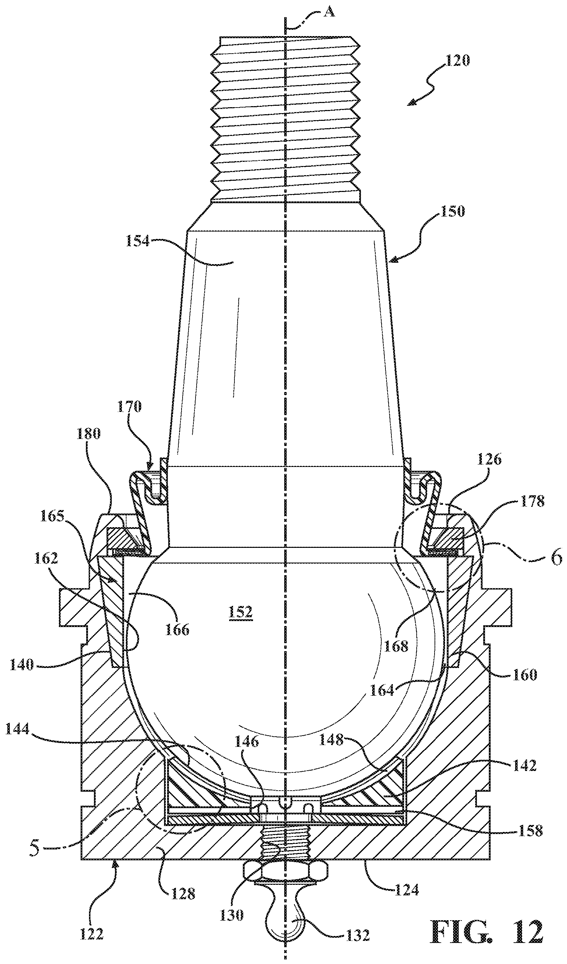

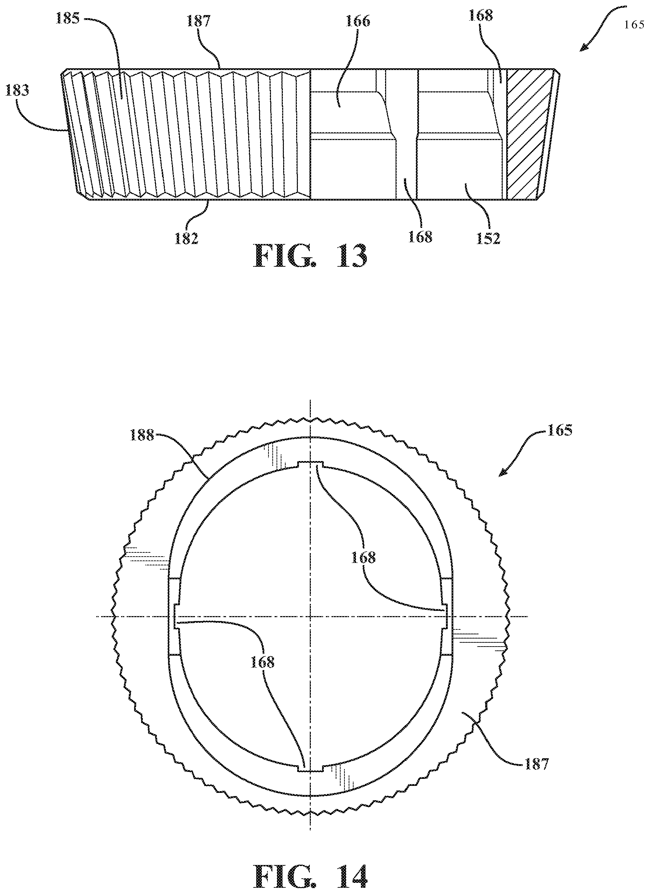

Referring now to Figure 12, a second exemplary embodiment of the socket assembly **120** is generally shown with like numerals, separated by a prefix of "1" indicating corresponding parts with the first exemplary embodiment described above. This exemplary embodiment is distinguished from the first exemplary embodiment discussed above in that the outer surface **183** of the exit bearing **165** has a frustum of a cone shape and is in contact with a tapered surface of the housing **22** to establish the predetermined seating location for the exit bearing **165** within the inner bore of the housing **122.** Specifically, the outer surface **183** of the exit bearing **165** has a first diameter nearest the open second end **126** of the housing **122** and a smaller second diameter nearest the closed first end **124** of the housing **122.** The frustum of a cone shape of the exit bearing **165** reduces the forces required to dislodge the exit bearing **165** from the predetermined seating location within the inner bore of the housing **122.** Referring now to Figure 14, the exit bearing **165** of the second exemplary embodiment is also distinguished from that of the first exemplary embodiment by the opening **188** in the top surface **187** being generally elliptical, for oval, in shape. The elliptical or oval shaped opening **188** allows the ball stud **150** (shown in Figure 12) to rotate by a greater magnitude relative to the housing **122** (also shown in Figure 12) in one rotational direction than in another. That is, the shape of the opening **188** constrains, or limits, the rotation of the ball stud **150** in one rotational direction as compared to another rotational direction.

Another aspect of the present invention is a method of making a socket assembly **20,** such as the exemplary socket assembly shown in Figures 3-8. The method includes the step of preparing a housing **22** with an inner bore which extends from a wall **28** at a lower end **24** to an open second end **26.** The method proceeds with the step of inserting a first spring **56** into the inner bore of the housing **22.** The method continues with the step of inserting a backing bearing **42** into the inner bore of the housing **22** such that the backing bearing **42** is movable in a radial direction relative to the housing **22** within the inner bore. The method proceeds with the step of inserting a ball portion **52** of a ball stud **50** into the inner bore of the housing **22** such that a shank portion **54** projects out of the inner bore through the open second end **26** and wherein a curved outer surface of the ball portion **52** is in sliding contact with a first bearing surface **44** of the backing bearing **42.** The method continues with the step of inserting an exit bearing **65** into the inner bore of the housing **22** such that a cylindrical portion **62** of a second bearing surface of the exit bearing **65** is in sliding contact with an equator, or centerline, of the ball portion **52** of the ball stud **50** and such that a semi-spherical portion **66** of the second bearing surface is in sliding contact with an opposite hemisphere of the ball portion **52** from the first bearing surface **44** of the backing bearing **42.** The method proceeds with the step of inserting a second spring **74** into the inner bore of the housing **22** and biasing the exit bearing **65** towards a predetermined location established by the housing **22** while allowing the exit bearing **65** to move from the predetermined location in a direction towards the open second end **26** of the housing **22** against a biasing force of the second spring **74.** The method may also include the steps of inserting a cover plate **78** into the inner bore of the housing **22** and deforming (such as through swaging) the housing **22** adjacent the open second end **26** to trap the cover plate **78,** first spring **56,** backing bearing **42,** ball portion **52** of the ball stud **50,** exit bearing **65** and second spring **74** in the inner bore of the housing **22.**

It should be appreciated that the use of the terms "upper" and "lower" herein is in reference to the orientation of the socket assembly **20** in the Figures and is not to be interpreted as requiring a particular orientation or in any way be limiting.

Obviously, many modifications and variations of the present invention are possible in light of the above teachings and may be practiced otherwise than as specifically described while within the scope of the appended claims. It is contemplated that all features of all claims and of all embodiments can be combined with each other, so long as such combinations would not contradict one another. The invention is defined by the appended claims.

## Claims

1. A socket assembly (20; 120), comprising:
a housing (22; 122) with an inner bore that extends along an axis (A) from a wall (28; 128) at a generally closed first end (24; 124) to an open second end (26; 126);
a ball stud (50; 150) having a ball portion (52; 152) which is received in said inner bore of said housing and having a shank portion (54; 154) which projects out of said inner bore through said open second end;
a backing bearing (42; 142) disposed in said inner bore and presenting a curved first bearing surface (44; 144) in surface-to-surface contact with an outer surface of said ball portion of said ball stud;
a first spring (56) disposed in said inner bore and biasing said first bearing surface of said backing bearing against said ball portion of said ball stud;
an exit bearing (65; 165) disposed in said inner bore of said housing and presenting a second bearing surface with a semi-spherical portion (66; 166) in surface-to-surface contact with an opposite hemisphere of said ball portion of said ball stud from said first bearing surface of said backing bearing;
a second spring (74) biasing said exit bearing into a predetermined location established by said housing; and
said exit bearing being movable from said predetermined location in a direction towards said open second end of said housing against a biasing force of said second spring
**characterised in that** said second bearing surface has a cylindrical portion (62; 162) in contact with an equator of said ball portion (52; 152) of said ball stud (50; 150).

2. The socket assembly (20; 120) as set forth in claim 1 wherein said exit bearing (65; 165) has an outer surface (83; 183) that is frustum of a cone shaped with a first diameter nearest said open second end (26; 126) of said housing (22; 122) and a second diameter nearest said closed first end (24; 124) of said housing and wherein said first diameter is greater than said second diameter and wherein said outer surface is seated against a tapered inner surface of said housing when said exit bearing is in said predetermined location.

3. The socket assembly (20; 120) as set forth in claim 1 wherein said exit bearing (65; 165) is in an interference fit connection with said housing (22; 122).

4. The socket assembly (20; 120) as set forth in claim 3 wherein said exit bearing (65; 165) has an outer surface (83; 183) which presents a plurality of axially extending ridges (85; 185) that are spaced circumferentially from one another.

5. The socket assembly (20; 120) as set forth in claim 3 further including a dust boot (70; 170) sealed with said housing (22; 122) and sealed with said ball stud (50; 150) for retaining a lubricant within said inner bore of said housing and for keeping contaminants out of said inner bore of said housing, wherein optionally said second spring (74) is at least partially embedded in an elastic body of said dust boot.

6. The socket assembly (20; 120) as set forth in claim 1 wherein at least one of said first spring (56) and said second spring (74) is a Belleville washer.

7. The socket assembly (20; 120) as set forth in claim 1 wherein said wall (28; 128) at said closed first end (24; 124) of said housing (22; 122) presents a lubricant opening (30; 130) for receiving a lubricant into said inner bore of said housing.

8. The socket assembly (20; 120) as set forth in claim 7 wherein said first bearing surface (44; 144) of said backing bearing (42; 142) presents at least one lubricant channel (46; 146) for conveying the lubricant from said lubricant opening (30; 130) in said housing (22; 122) into a gap between said backing and exit bearings (42; 142, 65; 165).

9. The socket assembly (20; 120) as set forth in claim 8 wherein second bearing surface of said exit bearing (65; 165) presents at least one lubricant channel (46; 146).

10. The socket assembly as set forth in claim 1 wherein said second spring (74) is a Belleville washer.

11. The socket assembly (20; 120) as set forth in claim 1 wherein said housing (22; 122) presents a shoulder (40; 140) which faces towards said open second end (26; 126) of said housing and wherein said exit bearing (65; 165) abuts said shoulder when in said predetermined location.

12. The socket assembly (20; 120) as set forth in claim 1 further including a cover plate (78) disposed in said inner bore of said housing (22; 122) adjacent said open second end (65; 165), wherein optionally said housing at said second open end is bent inwardly to trap said cover plate in said inner bore of said housing.

13. A method of making a socket assembly (20; 120), comprising the steps of:
preparing a housing (22; 122) with an inner bore which extends along an axis (A) from a wall (28; 128) at a generally closed first end (24; 124) to an open second end (26; 126);
inserting a first spring (56) into the inner bore of the housing;
inserting a backing bearing (42; 142) with a first bearing surface (44; 144) into the inner bore of the housing such that the backing bearing is movable in a radial direction relative to the housing within the inner bore;
inserting a ball portion (52; 152) of a ball stud (50; 150) into the inner bore of the housing such that a shank portion (54; 154) of the ball stud projects out of the inner bore though the open second end and wherein a curved outer surface of the ball portion is in sliding contact with the first bearing surface of the backing bearing;
inserting an exit bearing (65; 165) into the inner bore of the housing such that a cylindrical portion (62; 162) of a second bearing surface of the exit bearing is in sliding contact with an equator of the ball portion of the ball stud and such that a semi-spherical portion (66; 166) of the second bearing surface is in sliding contact with an opposite hemisphere of the ball portion from the first bearing surface of the backing bearing; and
inserting a second spring (74) into the inner bore of the housing and biasing the exit bearing towards a predetermined location established by the housing while allowing the exit bearing to move from the predetermined location in a direction towards the open second end of the housing against a biasing force of the second spring.

14. The method as set forth in claim 13 further including the step of inserting a cover plate (78) into the inner bore of the housing (22; 122).

15. The method as set forth in claim 14 further including the step of deforming the housing (22; 122) adjacent the open second end (26; 126) to trap the cover plate (78), the first spring (56), the backing bearing (42; 142), the ball portion (52; 152) of the ball stud (50; 150), the exit bearing (65; 165) and the second spring (74) in the inner bore of the housing.

## Patentansprüche

1. Kugelgelenk (20; 120), umfassend:
ein Gehäuse (22; 122) mit einer Innenbohrung, die sich entlang einer Achse (A) von einer Wand (28; 128) an einem allgemein geschlossenen ersten Ende (24; 124) zu einem offenen zweiten Ende (26; 126) erstreckt;
einen Kugelbolzen (50; 150), der einen Kugelabschnitt (52; 152) aufweist, der in der Innenbohrung des Gehäuses aufgenommen wird, und einen Schaftabschnitt (54; 154) aufweist, der aus der Innenbohrung durch das offene zweite Ende vorragt;
ein Trägerlager (42; 142), das in der Innenbohrung angeordnet ist und eine gekrümmte erste Lageroberfläche (44; 144) in Oberflächenkontakt zu einer Außenfläche des Kugelabschnitts des Kugelbolzens bietet;
eine erste Feder (56), die in der Innenbohrung angeordnet ist und die erste Lageroberfläche des Trägerlagers gegen den Kugelabschnitt des Kugelbolzens vorspannt;
ein Ausgangslager (65; 165), das in der Innenbohrung des Gehäuses angeordnet ist und eine zweite Lageroberfläche mit einem halbkugelförmigen Abschnitt (66; 166) in Oberflächenkontakt zu einer gegenüberliegenden Halbkugel des Kugelabschnitts des Kugelbolzens von der ersten Lageroberfläche des Trägerlagers bietet;
eine zweite Feder (74), die das Ausgangslager in eine vorgegebene Position vorspannt, die durch das Gehäuse festgelegt ist; und
wobei das Ausgangslager von der vorgegebenen Position in eine Richtung zum offenen zweiten Ende des Gehäuses gegen eine Vorspannkraft der zweiten Feder bewegt werden kann,
**dadurch gekennzeichnet, dass** die zweite Lageroberfläche einen zylindrischen Abschnitt (62; 162) in Kontakt zu einem Äquator des Kugelabschnitts (52; 152) des Kugelbolzens (50; 150) aufweist.

2. Kugelgelenk (20; 120) nach Anspruch 1, wobei das Ausgangslager (65; 165) eine Außenfläche (83; 183) aufweist, die kegelstumpfförmig ist mit einem ersten Durchmesser am nächsten zum offenen zweiten Ende (26; 126) des Gehäuses (22; 122) und einem zweiten Durchmesser am nächsten zum geschlossenen ersten Ende (24; 124) des Gehäuses und wobei der erste Durchmesser größer als der zweite Durchmesser ist und wobei die Außenfläche an einer sich verjüngenden Innenfläche des Gehäuses sitzt, wenn sich das Ausgangslager in der vorgegebenen Position befindet.

3. Kugelgelenk (20; 120) nach Anspruch 1, wobei sich das Ausgangslager (65; 165) in einer Presssitzverbindung zum Gehäuse (22; 122) befindet.

4. Kugelgelenk (20; 120) nach Anspruch 3, wobei das Ausgangslager (65; 165) eine Außenfläche (83; 183) aufweist, die eine Vielzahl von sich axial erstreckenden Rippen (85; 185) bietet, die in Umfangsrichtung voneinander beabstandet sind.

5. Kugelgelenk (20; 120) nach Anspruch 3, ferner enthaltend eine mit dem Gehäuse (22; 122) und mit dem Kugelbolzen (50; 150) abgedichtete Staubmanschette (70; 170) zum Halten eines Schmiermittels in der Innenbohrung des Gehäuses und zum Fernhalten von Verunreinigungen aus der Innenbohrung des Gehäuses, wobei optional die zweite Feder (74) mindestens teilweise in einem elastischen Körper der Staubmanschette eingebettet ist.

6. Kugelgelenk (20; 120) nach Anspruch 1, wobei mindestens eine der ersten Feder (56) und der zweiten Feder (74) eine Belleville-Unterlegscheibe ist.

7. Kugelgelenk (20; 120) nach Anspruch 1, wobei die Wand (28; 128) am geschlossenen ersten Ende (24; 124) des Gehäuses (22; 122) eine Schmiermittelöffnung (30; 130) zum Aufnehmen eines Schmiermittels in der Innenbohrung des Gehäuses bietet.

8. Kugelgelenk (20; 120) nach Anspruch 7, wobei die erste Lagerfläche (44; 144) des Trägerlagers (42; 142) mindestens einen Schmiermittelkanal (46; 146) zum Transportieren des Schmiermittels von der Schmiermittelöffnung (30; 130) im Gehäuse (22; 122) in einen Spalt zwischen dem Träger- und den Ausgangslagern (42; 142, 65; 165) bietet.

9. Kugelgelenk (20; 120) nach Anspruch 8, wobei die zweite Lagerfläche des Ausgangslagers (65; 165) mindestens einen Schmiermittelkanal (46; 146) bietet.

10. Kugelgelenk nach Anspruch 1, wobei die zweite Feder (74) eine Belleville-Unterlegscheibe ist.

11. Kugelgelenk (20; 120) nach Anspruch 1, wobei das Gehäuse (22; 122) einen Absatz (40; 140) bietet, der zum offenen zweiten Ende (26; 126) des Gehäuses zeigt und wobei das Ausgangslager (65; 165) am Absatz anliegt, wenn es in der vorgegebenen Position ist.

12. Kugelgelenk (20; 120) nach Anspruch 1, ferner enthaltend eine Abdeckplatte (78), die in der Innenbohrung des Gehäuses (22; 122) angrenzend an das offene zweite Ende (65; 165) angeordnet ist, wobei optional das Gehäuse am zweiten offenen Ende nach innen gekrümmt ist, um die Abdeckplatte in der Innenbohrung des Gehäuses festzuhalten.

13. Verfahren zum Herstellen eines Kugelgelenks (20; 120), umfassend die folgenden Schritte:
ein Vorbereiten eines Gehäuses (22; 122) mit einer Innenbohrung, die sich entlang einer Achse (A) von einer Wand (28; 128) an einem allgemein geschlossenen ersten Ende (24; 124) zu einem offenen zweiten Ende (26; 126) erstreckt;
ein Einführen einer ersten Feder (56) in die Innenbohrung des Gehäuses;
ein Einführen eines Trägerlagers (42; 142) mit einer ersten Lageroberfläche (44; 144) in die Innenbohrung des Gehäuses, so dass das Trägerlager in einer Radialrichtung relativ zum Gehäuse in der Innenbohrung bewegt werden kann;
ein Einführen eines Kugelabschnitts (52; 152) eines Kugelbolzens (50; 150) in die Innenbohrung des Gehäuses, so dass ein Schaftabschnitt (54; 154) des Kugelbolzens durch das offene zweite Ende aus der Innenbohrung vorragt und wobei eine gekrümmte Außenfläche des Kugelabschnitts in Gleitkontakt zur ersten Lageroberfläche des Trägerlagers ist;
ein Einführen eines Ausgangslagers (65; 165) in die Innenbohrung des Gehäuses, so dass ein zylindrischer Abschnitt (62; 162) einer zweiten Lageroberfläche des Ausgangslagers in Gleitkontakt zu einem Äquator des Kugelabschnitts des Kugelbolzens ist und so dass ein halbkugelförmiger Abschnitt (66; 166) der zweiten Lageroberfläche in Gleitkontakt zu einer gegenüberliegenden Halbkugel des Kugelabschnitts von der ersten Lageroberfläche des Trägerlagers ist; und
ein Einführen einer zweiten Feder (74) in die Innenbohrung des Gehäuses und ein Vorspannen des Ausgangslagers zu einer vorgegebenen Position, die durch das Gehäuse festgelegt ist, während zugelassen wird, dass sich das Ausgangslager von der vorgegebenen Position in eine Richtung zum offenen zweiten Ende des Gehäuses gegen eine Vorspannkraft der zweiten Feder bewegt.

14. Verfahren nach Anspruch 13, ferner enthaltend den Schritt des Einführens einer Abdeckplatte (78) in die Innenbohrung des Gehäuses (22; 122).

15. Verfahren nach Anspruch 14, ferner enthaltend den Schritt des Deformierens des Gehäuses (22; 122) angrenzend an das offene zweite Ende (26; 126), um die Abdeckplatte (78), die erste Feder (56), das Trägerlager (42; 142), den Kugelabschnitt (52; 152) des Kugelbolzens (50; 150), das Ausgangslager (65; 165) und die zweite Feder (74) in der Innenbohrung des Gehäuses festzuhalten.

## Revendications

1. Ensemble douille (20 ; 120) comprenant :
un boîtier (22 ; 122) avec un alésage interne qui s'étend le long d'un axe (A) à partir d'une paroi (28 ; 128) au niveau d'une première extrémité généralement fermée (24 ; 124) jusqu'à une seconde extrémité ouverte (26 ; 126) ;
un goujon à rotule (50 ; 150) possédant une partie rotule (52 ; 152) qui est reçue dans ledit alésage interne dudit boîtier et possédant une partie tige (54 ; 154) faisant saillie hors dudit alésage interne à travers ladite seconde extrémité ouverte ;
un palier de support (42 ; 142) disposé dans ledit alésage interne et présentant une première surface de palier incurvée (44 ; 144) en contact surface à surface avec une surface externe de ladite partie rotule dudit goujon à rotule ;
un premier ressort (56) disposé dans ledit alésage interne et sollicitant ladite première surface de palier dudit palier de support contre ladite partie rotule dudit goujon à rotule ;
un palier de sortie (65 ; 165) disposé dans ledit alésage interne dudit boîtier et présentant une seconde surface de palier avec une partie semi-sphérique (66 ; 166) en contact surface à surface avec un hémisphère opposé de ladite partie rotule dudit goujon à rotule provenant de ladite première surface de palier dudit palier de support ;
un second ressort (74) sollicitant ledit palier de sortie dans un emplacement prédéfini établi par ledit boîtier ; et
ledit palier de sortie pouvant être déplacé à partir dudit emplacement prédéfini selon une direction allant vers ladite seconde extrémité ouverte dudit boîtier contre une force de sollicitation dudit second ressort, **caractérisé en ce que** ladite seconde surface de palier comporte une partie cylindrique (62 ; 162) en contact avec un équateur de ladite partie rotule (52 ; 152) dudit goujon à rotule (50 ; 150).

2. Ensemble douille (20 ; 120) selon la revendication 1, ledit palier de sortie (65 ; 165) possédant une surface externe (83 ; 183) qui est le tronc d'un cône façonné avec un premier diamètre le plus proche de ladite seconde extrémité ouverte (26 ; 126) dudit boîtier (22 ; 122) et d'un second diamètre le plus proche de ladite première extrémité fermée (24 ; 124) dudit boîtier et ledit premier diamètre étant supérieur audit second diamètre et ladite surface externe reposant contre une surface interne effilée dudit boîtier lorsque ledit palier de sortie est dans ledit emplacement prédéfini.

3. Ensemble douille (20 ; 120) selon la revendication 1, ledit palier de sortie (65 ; 165) étant dans un raccordement à ajustement serré avec ledit boîtier (22 ; 122).

4. Ensemble douille (20 ; 120) selon la revendication 3, ledit palier de sortie (65 ; 165) possédant une surface externe (83 ; 183) qui présente une pluralité d'arêtes s'étendant axialement (85 ; 185) qui sont espacées circonférentiellement les unes des autres.

5. Ensemble douille (20 ; 120) selon la revendication 3, comprenant en outre un soufflet anti-poussière (70 ; 170) scellé avec ledit logement (22 ; 122) et scellé avec ledit goujon à rotule (50 ; 150) destiné à retenir un lubrifiant à l'intérieur dudit alésage interne dudit boîtier et destiné à empêcher les contaminants de pénétrer à l'intérieur dudit alésage interne dudit boîtier, éventuellement ledit second ressort (74) étant au moins partiellement incorporé dans un corps élastique dudit soufflet anti-poussière.

6. Ensemble douille (20 ; 120) selon la revendication 1, au moins l'un dudit premier ressort (56) et dudit second ressort (74) étant une rondelle Belleville.

7. Ensemble douille (20 ; 120) selon la revendication 1, ladite paroi (28 ; 128) au niveau de ladite première extrémité fermée (24 ; 124) dudit boîtier (22 ; 122) présentant une ouverture de lubrifiant (30 ; 130) pour recevoir un lubrifiant dans ledit alésage interne dudit boîtier.

8. Ensemble douille (20 ; 120) selon la revendication 7, ladite première surface de palier (44 ; 144) dudit palier de support (42 ; 142) présentant au moins un canal de lubrifiant (46 ; 146) destiné à transporter le lubrifiant à partir de ladite ouverture de lubrifiant (30 ; 130) dans ledit boîtier (22 ; 122) dans un espace entre lesdits paliers de support et de sortie (42 ; 142, 65 ; 165).

9. Ensemble douille (20 ; 120) selon la revendication 8, ladite seconde surface de palier dudit palier de sortie (65 ; 165) présentant au moins un canal de lubrifiant (46 ; 146).

10. Ensemble douille selon la revendication 1, ledit second ressort (74) étant une rondelle Belleville.

11. Ensemble douille (20 ; 120) selon la revendication 1, ledit logement (22 ; 122) présentant un épaulement (40 ; 140) qui fait face à ladite seconde extrémité ouverte (26 ; 126) dudit boîtier et ledit palier de sortie (65 ; 165) venant en butée contre ledit épaulement dans ledit emplacement prédéfini.

12. Ensemble douille (20 ; 120) selon la revendication 1, comprenant en outre une plaque de recouvrement (78) disposée dans ledit alésage interne dudit boîtier (22 ; 122) adjacent à ladite seconde extrémité ouverte (65 ; 165), éventuellement, ledit boîtier au niveau de ladite seconde extrémité ouverte, étant pliée vers l'intérieur pour piéger ladite plaque de recouvrement dans ledit alésage interne dudit boîtier.

13. Procédé de fabrication d'un ensemble douille (20 ; 120), comprenant les étapes de :
préparation d'un boîtier (22 ; 122) avec un alésage interne qui s'étend le long d'un axe (A) à partir d'une paroi (28 ; 128) au niveau d'une première extrémité généralement fermée (24 ; 124) jusqu'à une seconde extrémité ouverte (26 ; 126) ;
insertion d'un premier ressort (56) dans l'alésage interne du boîtier ;
insertion d'un palier de support (42 ; 142) avec une première surface de palier (44 ; 144) dans l'alésage interne du boîtier de sorte que le palier de support puisse être déplacé selon une direction radiale par rapport au boîtier dans l'alésage interne ;
insertion d'une partie rotule (52 ; 152) d'un goujon à rotule (50 ; 150) dans l'alésage interne du boîtier de sorte qu'une partie tige (54 ; 154) du goujon à rotule fasse saillie hors de l'alésage interne à travers la seconde extrémité ouverte et une surface externe incurvée de la partie rotule étant en contact glissant avec la première surface de palier du palier de support ;
insertion d'un palier de sortie (65 ; 165) dans l'alésage interne du boîtier de sorte qu'une partie cylindrique (62 ; 162) d'une seconde surface de palier du palier sortie soit en contact coulissant avec un équateur de la partie rotule du goujon à rotule et de sorte qu'une partie semi-sphérique (66 ; 166) de la seconde surface de palier soit en contact coulissant avec un hémisphère opposé de la partie rotule par rapport à la première surface de palier du palier de support ; et
insertion d'un second ressort (74) dans l'alésage interne du boîtier et sollicitation du palier de sortie vers un emplacement prédéfini établi par le boîtier tout en permettant au palier de sortie de se déplacer à partir de l'emplacement prédéfini selon une direction allant vers la seconde extrémité ouverte du boîtier contre une force de sollicitation du second ressort.

14. Procédé selon la revendication 13, comprenant en outre l'étape d'insertion d'une plaque de recouvrement (78) dans l'alésage interne du boîtier (22 ; 122).

15. Procédé selon la revendication 14, comprenant en outre l'étape de déformation du boîtier (22 ; 122) adjacent de la seconde extrémité ouverte (26 ; 126) pour piéger la plaque de recouvrement (78), le premier ressort (56), le palier de support (42 ; 142), la partie rotule (52 ; 152) du goujon à rotule (50 ; 150), le palier de sortie (65 ; 165) et le second ressort (74) dans l'alésage interne du boîtier.
